# EUROPEAN PATENT SPECIFICATION

(11) **EP 0 563 866 B1**
(45) Date of publication and mention of the grant of the patent: **16.09.1998**
(21) Application number: 93105200.5
(22) Date of filing: 30.03.1993
(51) Int. Cl.: B23K 35/368

(54) **Basic type flux-cored wire for gas shielded arc welding**
Basischer Fülldraht zum Schutzgasschweissen
Fil-fourré basique pour le soudage à l'arc sous protection de gaz

(30) Priority: 30.09.1992 JP 285031/92; 31.03.1992 JP 105608/92
(43) Date of publication of application: 06.10.1993
(73) Proprietor: KABUSHIKI KAISHA KOBE SEIKO SHO, Kobe-shi Hyogo-ken 651 (JP)
(72) Inventor: Morimoto, Tomokazu, c/o Fujisawa Plant, Fujisawa-shi, Kanagawa-ken 251 (JP); Ikemoto, Kazuo, c/o Fujisawa Plant, Fujisawa-shi, Kanagawa-ken 251 (JP)
(74) Representative: Türk, Gille, Hrabal, Leifert

(56) References cited:
- FR-A- 2 011 336
- US-A- 3 177 340
- US-A- 3 392 263
- US-A- 4 109 059

## Description

### Background of the Invention

### 1. Field of the Invention

The present invention relates to a basic type flux-cored wire for gas shielded arc welding which is excellent in usability characteristics, and in low-temperature toughness and resistance to cracking, particularly, to hot cracking.

### 2. Description of the Prior Art

Conventionally, various types of basic type flux-cored wires for gas shielded arc welding have been proposed and put in practice. The wire of this type exhibits a good resistance to cracking and a good low-temperature toughness; however, it is worse in bead appearance, bead shape, slag removability, spatter loss and arc stability, as compared with the other type flux-cored wires such as a titania-based flux-cored wire.

The prior art basic type flux-cored wire has been used in DC-EN (direct current, polarity: wire-minus) to ensure a good arc stability and a good droplet transfer. These characteristics, however, cannot be ensured in DC-EP (direct current, polarity: wire-plus).

### Summary of the Invention

It is therefore an object of the present invention to provide a basic type flux-cored wire for gas shielded arc welding capable of enhancing the usability characteristics without degrading the resistance to cracking and the low-temperature toughness, and of being used in either polarity of DC-EN and DC-EP.

To achieve the above object, according to the present invention, there is provided a basic type flux-cored wire for gas shielded arc welding comprising a steel sheath and a basic type flux composition filled in the steel sheath.

The basic type flux composition contains, based on the weight of the total wire, one kind or two or more kinds selected from a group consisting of fluorides of Ca, Ba, Mg and Sr in the total amount of from 0.5 to 3%; one kind or two or more kinds selected from a group consisting of carbonates of Ca, Ba and Sr and complex oxides thereof in the total amount of from 0.5 to 3%; one kind or two or more kinds selected from a group consisting of fluorides, oxides and carbonates of alkali metals in the total amount of from 0.01 to 0.1%; and an iron powder in an amount of from 1.3 to 37.5%.

The basic type flux composition and/or the steel sheath contain 1.0 to 2.5% of Mn and 0.4 to 1.4% of Si Optionally, it can comprise Ti and/or Ti-oxide in a total amount of 0.01-0.10%, wherein the amount of Ti or Ti-oxide is calculated as TiO₂, respectively. based on the weight of the total wire.

Further, the amounts of the metal powders and non-metal powders contained in the basic type flux composition satisfy a relation of (metal powders/non-metal powders ≧ 2), and the amounts of Mn and Si contained in the basic type flux composition and/or the steel sheath satisfy a relation of (1.0 ≦ Mn/Si ≦ 2.5).

### Detailed Description of the Invention

Hereinafter, the present invention will be described in detail.

A basic type flux-cored wire for gas shielded arc welding of the present invention comprises a steel sheath and a basic type flux composition filled in the steel sheath.

The basic type flux composition contains, based on the weight of the total wire, one kind or two or more kinds selected from a group consisting of fluorides of Ca, Ba, Mg and Sr in the total amount of from 0.5 to 3%; one kind or two or more kinds selected from a group consisting of carbonates of Ca, Ba and Sr and complex oxides thereof in the total amount of from 0.5 to 3%; one kind or two or more kinds selected from a group consisting of fluorides, oxides and carbonates of alkali metals in the total amount of from 0.01 to 0.1%; and an iron powder in an amount of from 1.3 to 37.5%.

The basic type flux composition and/or the steel sheath contain 1.0 to 2.5% of Mn and 0.4 to 1.4% of Si based on the weight of the total wire.

Further, the amounts of the metal powders and non-metal powders contained in the basic type flux composition satisfy a relation of (metal powders/non-metal powders ≧ 2), and the amounts of Mn and Si contained in the basic type flux composition and/or the steel sheath satisfy a relation of (1.0 ≦ Mn/Si ≦ 2.5).

Optionally, the above flux composition and/or the steel sheath may contain, based on the weight of the total wire, Ti and/or Ti oxides in the total amount of 0.01 to 0.10% (calculated as TiO₂), and the basic type flux composition may contain 0.08 to 1.5% of Mg based on the weight of the total wire.

The reason why the types and contents of flux components are determined in the present invention are described with their effects.

### Fluorides of Ca, Ba, Mg, and Sr:

Fluorides of Ca, Ba, Mg and Sr are added as a main slag formation agent, and are effective to improve the bead appearance. To obtain the above effect, they must be added in the flux in the total amount of at least 0.5%. However, over 3%, the generation amounts of spatter and fume are increased, which lowers the viscosity of the molten metal, with a result that the bead is unfavorably shaped in a convex form. Accordingly, one kind or two or more kinds of fluorides of Ca, Ba, Mg and Sr are added in the flux in the total amount of from 0.5 to 3% based on the weight of the total wire, preferably, from 1.5 to 2.5%.

### Carbonates and complex oxides of Ca, Ba, Sr:

Carbonates and complex oxides of Ca, Ba and Sr are added as a slag formation agent, and are effective to adjust the bead shape, and further to improve the shielding performance by the produced decomposition gas (CO₂). With respect to the bead shape, the other compounds of Ca, Ba and Sr except for fluorides thereof are also effective; however, in terms of hygroscopicity, the carbonates or complex oxides thereof having a low hygroscopicity may be used. To obtain the above effects, they must be added in the flux in the total amount of at least 0.5%. However, over 3%, the generation amount of spatter is increased, and the arc stability is deteriorated. Accordingly, one kind or two or more kinds of carbonates and/or complex oxides of Ca, Ba, and Sr are added in the flux in the total amount of from 0.5% to 3% based on the weight of the total wire, preferably, from 1.0 to 2.0%.

### Alkali metal compounds (fluorides, oxides, and carbonates):

Fluorides, oxides and carbonates of alkali metals are effective to stabilize the arc. To obtain the above effect, they must be added in the flux in the total amount of at least 0.01%. However, over 0.1%, the viscosity of molten metal is lowered excessively, with a result that the bead is unfavorably shaped in a convex form. Accordingly, one kind or two or more kinds of alkali metal compounds (fluorides, oxides and carbonates) are added in the flux in the total amount of from 0.01 to 0.1% based of weight of the total wire.

### Mn, Si:

Mn and Si are added as a deoxidizing agent, and are effective to adjust the composition and the viscosity of molten metal. To obtain the above effects, 1.0% or more of Mn and 0.4% or more of Si must be added. However, when more than 2.5% of Mn and more than 1.4% of Si are added, the properties of the weld metal, particularly in the mechanical properties are deteriorated and the bead shape is worsened. Accordingly, 1.0 to 2.5% of Mn and 0.4 to 1.4% of Si based on the weight of the total wire are added in the flux and/or the steel sheath.

### Ratio of Mn/Si:

In order to adjust the viscosity of the molten metal for improving the bead shape, the ratio of Mn/Si is in the range of from 1.0 to 2.5. Beyond this range, the above effect cannot be expected.

### Iron powder:

An iron powder is added in the flux to improve the deposition rate and deposition efficiency of the wire, and to stabilize the arc. To obtain the above effects, the added amount of the iron powder is in the range from 1.3 to 37.5% based on the weight of the total wire.

### Ratio of Metal powders/non-metal powders:

By increasing the ratio of metal powders in the flux, it is possible to suitably adjust the amount and the flowability of the slag and the flowability of the molten metal. In particular, in horizontal fillet welding, the slag at the bead toe portion can be prevented from being slipped down and being excessive thereat, so that the toe shape can be formed in an obtuse angle, which improves the wettability of the weld metal with the base metal. Also, the covering of the slag can be made uniform, with an improvement in the slag removability. To obtain the above effects, the ratio of metal powders/non-metal powders is specified to be 2 or more.

In addition, the sources of metal powders include metals such as Fe, Mn, Si, Ti, Al and Mg, and alloys such as Fe-Mn, Fe-Si, Fe-Ti, Fe-Al and Al-Mg. The sources of non-metal powders include fluorides, carbonates, oxides and complex oxides.

### Ti, Ti oxide:

Ti and Ti oxide are effective to enhance the arc stability in the DC-EP polarity, and to improve the bead shape. Further, the addition of metal Ti has a deoxidizing effect. To obtain the above effects, Ti and Ti oxide must be added in the total amount of at least 0.01%. However, over 0.10%, they tend to be separated from a slag layer composed mainly of an alkali earth compound, and to tightly adhere on the surface of the bead, with a failure in the slag removability. Accordingly, Ti and Ti oxide may be added in the flux and/or the steel sheath in total amount of from 0.01 to 0.10% (calculated as TiO₂) based on the weight of the total wire.

The sources of Ti include metal Ti, and Ti alloys such as Fe-Ti and Ni-Ti, and the sources of Ti oxides include rutile, titanium slag and ilmenite and the like.

### Mg:

Mg is effective to improve the arc stability and to reduce the generation amount of spatter. Further, in vertical upward welding, Mg is effective to suppress the bead from being hung, and hence to improve the usability characteristics. When the content of Mg is less than 0.08%, the above effect cannot be expected. In the other hand, over 1.5%, the bead appearance is deteriorated, and the generation amounts of fume and spatter are increased. In addition, the sources of Mg include Mg alloys such as Ni-Mg, other than metal Mg.

In addition, the arc stabilizers and the slag formation agents and alloying elements may be added in the flux, if needed. Also, the shielding gas may be used without no limitation in its composition. The sectional shape of the flux-cored wire and the diameter of the wire are not particularly limited. The flux filling rate in the steel sheath is preferably in the range of from 10 to 40% based on the total weight of the wire.

### Examples

The present invention will be more clearly understood with reference to the following examples.

Flux-cored wires (1.2mm⌀) were manufactured as an experiment, using a steel sheath having the chemical composition as shown in Table 1, in which flux having compositions (wt% to the total wire) indicated in Tables 2-1 and 2-2 were filled at a flux filling rate of 15%. The thus made wires were used for performing a horizontal fillet arc welding of T-type joint test (leg length: 6mm) under the welding conditions that the welding current-voltage was 280A-30V and the shielding gas was 80%Ar-20%CO₂ (flow rate: 25 l/min). As the base metal, there was used JIS G3106 SM490A (plate thickness: 12mm).

**Table 1**

| Chemical composition (wt%) of steel sheath | | | | |
|---|---|---|---|---|
| C | Si | Mn | P | S |
| 0.04 | 0.01 | 0.23 | 0.012 | 0.008 |

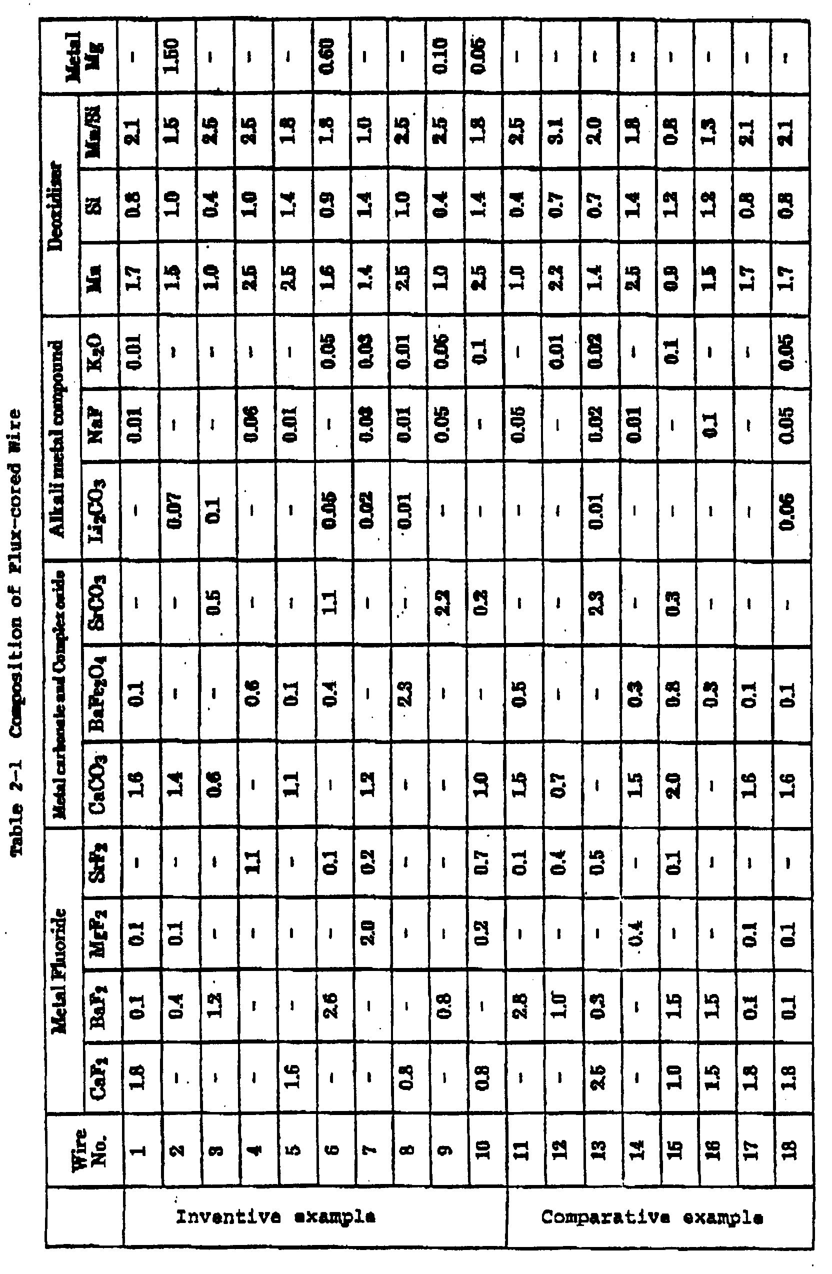

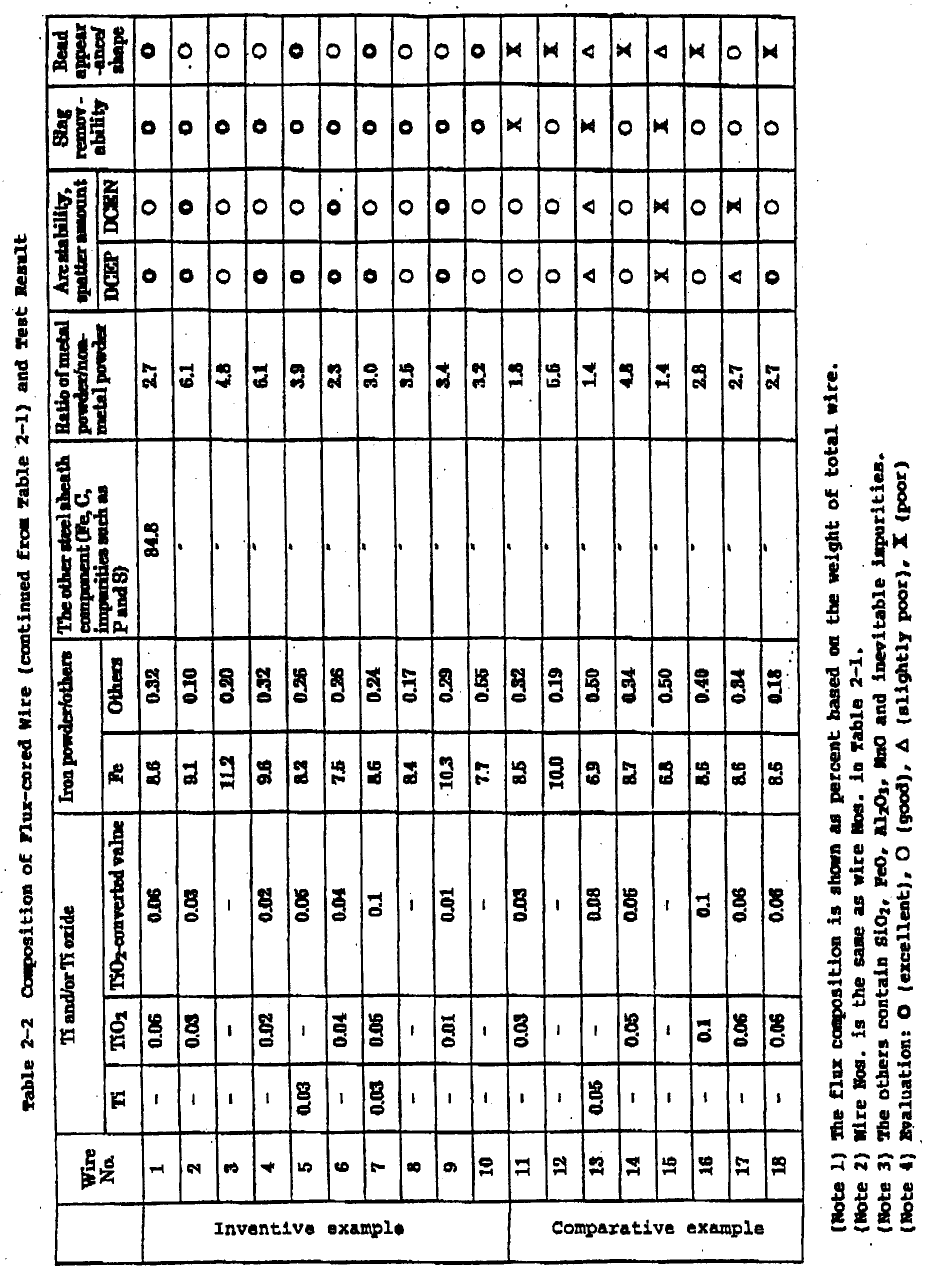

The samples thus obtained were examined for the usability characteristics such as the arc stability, the amount of spatter and slag removability, and the bead appearance/shape. The results are shown in Tables 2-1 and 2-2. As will be apparent from these Tables, the inventive examples are excellent in arc stability, and reduced in the amount of spatter, and further, are excellent in the slag removability, and the bead appearance/shape, not only in the case of DC-EN polarity but also in the case of DC-EP polarity. In addition, it was revealed that the inventive examples are also excellent in crack resistance and low-temperature toughness.

As described above, according to the present invention, it is possible to ensure the excellent usability characteristics even in the DC-EP polarity without degrading the crack resistance and low-temperature toughness.

## Claims

1. A basic type flux-cored wire for gas shielded arc welding comprising a steel sheath and a basic type flux composition filled in said steel sheath,
said basic type flux composition containing, based on the weight of the total wire, one kind or two or more kinds selected from a group consisting of fluorides of Ca, Ba, Mg and Sr in the total amount of from 0.5 to 3%; one kind or two or more kinds selected from a group consisting of carbonates of Ca, Ba and Sr and complex oxides thereof in the total amount of from 0.5 to 3%; one kind or two or more kinds selected from a group consisting of fluorides, oxides and carbonates of alkali metals in the total amount of from 0.01 to 0.1%; and an iron powder in an amount of from 1.3 to 37.5%, and
said basic type flux composition and/or said steel sheath containing 1.0 to 2.5% of Mn and 0.4 to 1.4% of Si, and optionally comprising Ti and/or Ti oxide in the total amount of 0.01 to 0.10%, wherein each amount of Ti and Ti oxide is calculated as TiO₂, respectively, based on the weight of the total wire,
wherein the amounts of the metal powders and non-metal powders contained in said basic type flux composition satisfy a relation of (metal powders/non-metal powders ≧ 2), and the amounts of Mn and Si contained in said basic type flux composition and/or said steel sheath satisfy a relation of (1.0 ≦ Mn/Si ≦ 2.5).

2. A basic type flux-cored wire for gas shielded arc welding according to claim 1, wherein said basic type flux composition and/or said steel sheath contain Ti and/or Ti oxide in the total amount of from 0.01 to 0.10%, wherein each amount of Ti and Ti oxide is calculated as TiO₂, respectively, based on the weight of the total wire.

3. A basic type flux-cored wire for gas shielded arc welding according to claim 1 or 2, wherein said basic type flux composition contains 0.08 to 1.5% of Mg based on the weight of the total wire.

4. A basic type flux-cored wire for gas shielded arc welding according to claim 1, wherein said basic type flux composition contains one kind or two or more kinds selected from a group consisting of fluorides of Ca, Ba, Mg and Sr in the total amount of 1.5 to 2.5% based on the weight of the total wire.

5. A basic type flux-cored wire for gas shielded arc welding according to claim 1, wherein said basic type flux composition contains one kind or two or more kinds selected from a group consisting of carbonates and complex oxides of Ca, Ba and Sr in the total amount of from 1.0 to 2.0% based of the weight of the total wire.

## Patentansprüche

1. Draht mit Flußmittelkern vom basischen Typ fürs Schutzgas-Bogenschweißen, umfassend eine Stahlhülle und eine Flußmittelzusammensetzung vom basischen Typ, die in die Stahlhülle gefüllt ist,
wobei die Flußmittelzusammensetzung vom basischen Typ, auf Basis des Gewichts des gesamten Drahtes, eine Art oder zwei oder mehr Arten, ausgewählt aus der Gruppe bestehend aus Fluoriden von Ca, Ba, Mg und Sr in einer Gesamtmenge von 0,5 bis 3 %; eine Art oder zwei oder mehr Arten, ausgewählt aus der Gruppe bestehend aus Carbonaten von Ca, Ba und Sr und komplexen Oxiden davon in einer Gesamtmenge von 0,5 bis 3 %; eine Art oder zwei oder mehr Arten, ausgewählt aus einer Gruppe bestehend aus Fluoriden, Oxiden und Carbonaten von Alkalimetallen in einer Gesamtmenge von 0,01 bis 0,1 %; und ein Eisenpulver in einer Menge von 1,3 bis 37,5 % enthält, und
wobei die Flußmittelzusammensetzung vom basischen Typ und/oder die Stahlhülle, bezogen auf das Gewicht des gesamten Drahtes, 1,0 bis 2,5 % Mn und 0,4 bis 1,4 % Si enthält und wahlweise Ti und/oder Ti-Oxid in einer Gesamtmenge von 0,01 bis 0,10 % umfaßt, wobei jede Menge von Ti und Ti-Oxid jeweils als TiO₂ berechnet wird,
wobei die Mengen der in der Flußmittelzusammensetzung vom basischen Typ enthaltenen Metallpulver und Nichtmetallpulver der Beziehung (Metallpulver/Nichtmetallpulver ≥ 2) genügen und die Mengen von Mn und Si, die in der Flußmittelzusammensetzung vom basischen Typ und/oder der Stahlhülle enthalten sind, der Beziehung (1,0 ≤ Mn/Si ≤ 2,5) genügen.

2. Draht mit Flußmittelkern vom basischen Typ für Schutzgas-Bogenschweißen nach Anspruch 1, wobei die Flußmittelzusammensetzung vom basischen Typ und/oder die Stahlhülle Ti und/oder Ti-Oxid in einer Gesamtmenge von 0,01 bis 0,10 % enthalten, wobei jede Menge von Ti und Ti-Oxid jeweils als TiO₂ berechnet wird, bezogen auf das Gewicht des gesamten Drahtes.

3. Draht mit Flußmittelkern vom basischen Typ fürs Schutzgas-Bogenschweißen nach Anspruch 1 oder 2, wobei die Flußmittelzusammensetzung vom basischen Typ 0,08 bis 1,5 % Mg, bezogen auf das Gewicht des gesamten Drahtes, enthält.

4. Draht mit Flußmittelkern vom basischen Typ fürs Schutzgas-Bogenschweißen nach Anspruch 1, wobei die Flußmittelzusammensetzung vom basischen Typ eine Art oder zwei oder mehr Arten, ausgewählt aus der Gruppe bestehend aus Fluoriden von Ca, Ba, Mg und Sr, in einer Gesamtmenge von 1,5 bis 2,5 %, bezogen auf das Gewicht des gesamten Drahtes, enthält.

5. Draht mit Flußmittelkern vom basischen Typ fürs Schutzgas-Bogenschweißen nach Anspruch 1, wobei die Flußmittelzusammensetzung vom basischen Typ eine Art oder zwei oder mehr Arten, ausgewählt aus der Gruppe bestehend aus Carbonaten und komplexen Oxiden von Ca, Ba und Sr in einer Gesamtmenge von 1,0 bis 2,0 %, bezogen auf das Gewicht des gesamten Drahtes, enthält.

## Revendications

1. Fil d'apport à âme décapante de type de base pour soudage à l'arc en atmosphère gazeuse comprenant une gaine d'acier et une composition de flux de type de base chargée dans ladite gaine,
ladite composition de flux de type de base contenant, sur la base du poids total du fil, une sorte ou deux ou plusieurs sortes de flux choisis parmi un groupe constitué de fluorures de Ca, Ba, Mg et Sr en quantité totale de 0,5 à 3%; une sorte ou deux ou plusieurs sortes de flux choisis parmi un groupe constitué de carbonates de Ca, Ba et Sr et d'oxydes complexes de ceux-ci en quantité totale de 0,5 à 3%; une sorte ou deux ou plusieurs sortes de flux choisis parmi un groupe constitué de fluorures, d'oxydes et de carbonates de métaux alcalins en quantité totale de 0,01 à 0,1%; et une poudre de fer en une quantité de 1,3 à 37,5%, et
ladite composition de flux de type de base et/ou ladite gaine d'acier contenant 1,0 à 2,5% de Mn et 0,4 à 1,4% de Si, et comprenant éventuellement du Ti et/ou de l'oxyde de Ti en quantité totale de 0,01 à 0,10%, chaque quantité de Ti et d'oxyde de Ti étant respectivement calculée sous la forme TiO₂, sur la base du poids total du fil,
dans lequel les quantités des poudres métalliques et des poudres non métalliques contenues dans ladite composition de flux de type de base satisfont à la relation (poudres métalliques/poudres non métalliques ≥ 2), et les quantités de Mn et de Si contenues dans ladite composition de flux de type de base et/ou ladite gaine d'acier, satisfont à la relation (1,0 ≤ Mn/Si ≤ 2,5).

2. Fil d'apport à âme décapante de type de base pour soudage à l'arc en atmosphère gazeuse selon la revendication 1, dans lequel ladite composition de flux de type de base et/ou ladite gaine d'acier contient du Ti et/ou de l'oxyde de Ti en quantité totale de 0,01 à 0,10%, chaque quantité de Ti et d'oxyde de Ti étant respectivement calculée sous la forme TiO₂, sur la base du poids total du fil.

3. Fil d'apport à âme décapante de type de base pour soudage à l'arc en atmosphère gazeuse selon la revendication 1 ou 2, dans lequel ladite composition de flux de type de base contient 0,08 à 1,5% de Mg, sur la base du poids total du fil.

4. Fil d'apport à âme décapante de type de base pour soudage à l'arc en atmosphère gazeuse selon la revendication 1, dans lequel ladite composition de flux de type de base contient une sorte ou deux ou plusieurs sortes de flux choisis parmi un groupe constitué de fluorures de Ca, Ba, Mg et Sr en quantité totale de 1,5 à 2,5%, sur la base du poids total du fil.

5. Fil d'apport à âme décapante de type de base pour soudage à l'arc en atmosphère gazeuse selon la revendication 1, dans lequel ladite composition de flux de type de base contient une sorte ou deux ou plusieurs sortes de flux choisis parmi un groupe constitué de carbonates et d'oxydes complexes de Ca, Ba et Sr en quantité totale de 1,0 à 2,0%, sur la base du poids total du fil.
